# EUROPÄISCHE PATENTSCHRIFT

(11) **EP 4 158 436 B1**
(45) Veröffentlichungstag und Bekanntmachung des Hinweises auf die Patenterteilung: **25.12.2024**
(21) Anmeldenummer: 21728856.2
(22) Anmeldetag: 20.05.2021
(51) Int. Cl.: G05D 1/00

(54) **VERFAHREN ZUR UMGEHUNG VON UNPASSIERBAREN HINDERNISSEN DURCH EINEN ROBOTER**
METHOD FOR BYPASSING IMPASSABLE OBSTACLES BY A ROBOT
PROCÉDÉ DE CONTOURNEMENT D'OBSTACLES INFRANCHISSABLES PAR UN ROBOT

(30) Priorität: 02.06.2020 DE 102020206871
(43) Veröffentlichungstag der Anmeldung: 05.04.2023
(73) Patentinhaber: BSH Hausgeräte GmbH, 81739 München (DE)
(72) Erfinder: BAIRAMPALLI, Sandeep, Bangalore (IN); FREMEREY, Maximilian, 97616 Bad Neustadt / Saale (DE); GHOSH, Pratip, Bangalore (IN); NITHIN, Ganesh, Bangalore (IN)
(86) Internationale Anmeldenummer: PCT/EP2021/063496
(87) Internationale Veröffentlichungsnummer: WO 2021/244862

(56) Entgegenhaltungen:
- EP-A1- 2 690 582
- EP-B1- 2 690 582
- "Intelligent Unmanned Ground Vehicles", 1 January 1997, SPRINGER US, Boston, MA, ISBN: 978-1-4615-6325-9, article DEAN POMERLEAU: "Neural Network Vision for Robot Driving", pages: 53 - 72, XP055553730, DOI: 10.1007/978-1-4615-6325-9_4

## Beschreibung

Die vorliegende Erfindung betrifft ein Verfahren zur Umgehung von unpassierbaren Hindernissen durch einen Roboter, insbesondere Haushaltsroboter, durch Einsatz künstlicher Intelligenz. Die Erfindung betrifft des Weiteren ein System, das einen Roboter und eine IT-Infrastruktur umfasst und welches zum Durchführen des Verfahrens ausgestaltet ist. Ferner betrifft die Erfindung ein entsprechendes Computerprogramm sowie ein entsprechendes computerlesbares Medium.

Ein Roboter, insbesondere ein Haushaltsroboter, bewegt sich im Betrieb durch einen Raum. Ein Haushaltsroboter bewegt sich beispielsweise durch vorgegebene Räume in einem Haushalt. Zu diesem Zweck ist für den Roboter üblicherweise eine Routine zum Bewegen, nachfolgend auch Bewegungsroutine genannt, vorgesehen, welche unter Berücksichtigung der Umgebung des Roboters ausgeführt wird. Wichtig bei derartigen Routinen sind das Erkennen und die Umgehung von Hindernissen, welche für den Roboter unpassierbar sind.

Aus dem Stand der Technik sind Verfahren bekannt, welche die Routinen von Haushaltsrobotern durch den Einsatz künstlicher Intelligenz realisieren und/oder verbessern.

Aus der DE 10 2016 124 916 A1 ist beispielsweise ein Reinigungsroboter als Haushaltsroboter bekannt, der über eine optische Aufnahmeeinrichtung Bilder von Hindernissen fertigt, welche von einem Nutzer manuell beschrieben werden. Die dem jeweiligen Bild zugehörige Beschreibung wird von einer künstlichen Intelligenz verwendet, um die Erkennung des jeweiligen Hindernisses in der Bewegungsroutine dahingehend umzusetzen, dass das Hindernis umgangen wird. Nachteilig hierbei ist insbesondere die benötigte manuelle Beschreibung des jeweiligen Bildes durch den Nutzer.

Aus der US 2018 / 0 210 445 A1 ist ein Haushaltsroboter bekannt, der eine Sensoreinrichtung zum Erkennen von Hindernissen aufweist. Bei der Erkennung des Hindernisses wird ein Bild des Hindernisses gefertigt und in einer für die Bewegungsroutine vorgesehenen Karte des Raums, durch den sich der Haushaltsroboter bewegt, hinterlegt. Eine künstliche Intelligenz wird dazu eingesetzt, um Eigenschaften des Hindernisses zu erkennen. Die durch die künstliche Intelligenz gewonnenen Erkenntnisse der Eigenschaften des Hindernisses werden anschließend in der Bewegungsroutine des Roboters verwendet. Nachteilig hierbei ist, dass bei einer Verschiebung des Hindernisses im Raum dieses Hindernis nicht oder mit geringerer Zuverlässigkeit erkannt wird.

Aus der EP 2 690 582 A1 ist unter anderem ein System zum Steuern einer automatisierten Vorrichtung bekannt, bei dem eine Lerneinheit zum Anpassen des Systems an beliebige Umweltbedingungen Verwendung findet.

Aus Dean Pomerleau: "Neural Network Vision for Robot Driving" In: "Intelligent Unmanned Ground Vehicles", 1. Januar 1997 (1997-01-01), Springer US, Boston, MA, XP055553730, ISBN: 978-1-4615-6325-9 Seiten 53-72, DOI: 10.1007/978-1-4615-6325-9_4 ist unter anderem bekannt, eine Vielzahl von Aufnahmen für einen Trainingsvorgang zu verwenden.

Aus dem Stand der Technik ist es also allgemein bekannt, bekannte Hindernisse in der Bewegungsroutine dahingehend zu berücksichtigen, dass diese umgangen werden. Da die Anzahl und Häufigkeit potentieller Hindernisse von Raum zu Raum unterschiedlich ist und sich sowohl zeitlich als auch hinsichtlich der Position ändern kann, ist es wünschenswert, in der Bewegungsroutine neue bzw. unbekannte Hindernisse zuverlässig zu erkennen und zu umgehen.

Ein Aspekt beim Einsatz künstlicher Intelligenz und die damit verbundenen Verbesserungen in der Bewegungsroutine ist das sogenannte maschinelle Lernen. Zu diesem Zweck werden sogenannte Trainingsdaten benötigt, mit denen die künstliche Intelligenz trainiert wird, um die Bewegungsroutine zu verbessern. Bei einer Bewegungsroutine, welche die Umgebung des Roboters optisch erfasst, ist somit zum maschinellen Lernen eine Vielzahl von optischen Aufnahmen notwendig. Aufgrund der beschriebenen Vielzahl möglicher Hindernisse und deren Variationen in der Position ist somit eine sehr große Menge an optischen Aufnahmen notwendig, um die künstliche Intelligenz entsprechend zu optimieren. Problematisch hierbei ist, dass eine solche große Menge von Aufnahmen nicht vorliegt und/oder dass die Beschaffung derartiger Aufnahmen kostenintensiv ist. Darüber hinaus führt die Berücksichtigung von Datenschutzgrundsätzen dazu, dass die benötigten Aufnahmen nicht beliebig gefertigt und eingesetzt werden können.

Die vorliegende Erfindung beschäftigt sich daher mit der Aufgabe, für ein Verfahren zur Umgehung von Hindernissen durch einen Roboter sowie für ein zugehöriges System verbesserte oder zumindest andere Ausführungsformen anzugeben, welche sich insbesondere durch eine kostengünstige und/oder effektive und/oder datenschutzrechtlich konforme Umgehung von Hindernissen auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zur Umgehung von unpassierbaren Hindernissen durch einen Roboter das jeweilige Hindernis durch eine Kollision des Roboters mit dem Hindernis zu erkennen, eine optische Aufnahme des Hindernisses zu fertigen und aus der optischen Aufnahme künstlich eine Vielzahl sich voneinander unterscheidender Duplikate zu erzeugen, welche zum Trainieren einer künstlichen Intelligenz eingesetzt werden, wobei das Trainingsergebnis anschließend verwendet wird, derart, dass der Roboter künftig das Hindernis umgeht. Insbesondere handelt es sich hierbei um Hindernisse, die einer beim Bewegen des Roboters verwendenden Bewegungsroutine zum Zeitpunkt der Kollision unbekannt sind. Die erfindungsgemäße Lösung erlaubt es also, durch das Fertigen einer optischen Aufnahme des, insbesondere unbekannten bzw. neuen Hindernisses, nachfolgend auch Originalaufnahme genannt, die künstliche Intelligenz zu trainieren, indem aus der Originalaufnahme eine Vielzahl von Duplikaten künstlich erzeugt wird. Somit ist es insbesondere auch möglich, bis zur Kollision unbekannte Hindernisse in der Bewegungsroutine derart zu berücksichtigen, dass diese umgangen werden, eine Kollision mit den Hindernissen also verhindert wird. Zugleich ist zum Trainieren der künstlichen Intelligenz eine reduzierte Anzahl von Originalaufnahmen, insbesondere lediglich eine einzige Originalaufnahme des jeweiligen Hindernisses, notwendig. Somit können das Trainieren der künstlichen Intelligenz und die Verbesserung der Bewegungsroutine ausgehend von einer reduzierten Anzahl von Originalaufnahmen, insbesondere einer einzigen Originalaufnahme des Hindernisses, kostengünstig und zuverlässig sowie unter Berücksichtigung von datenschutzrechtlichen Vorgaben umgesetzt werden. Darüber hinaus führt die erfindungsgemäße Idee dazu, dass auch für die jeweilige Umgebung, insbesondere für den jeweiligen Raum, durch den sich der Roboter bewegt, spezifische Hindernisse zuverlässig umgangen werden, insbesondere auch wenn sich ihre Position im Raum ändert.

Dem Erfindungsgedanken entsprechend wird bei einem Verfahren zur Umgehung von unpassierbaren Hindernissen durch einen Roboter beim Bewegen des Roboters durch einen Raum eine Kollision des Roboters mit einem Hindernis erkannt. Beim Erkennen der Kollision wird eine optische Originalaufnahme, insbesondere eine Fotografie, des Hindernisses gefertigt. Aus der Originalaufnahme wird anschließend eine Vielzahl von Duplikaten künstlich erzeugt, wobei die Duplikate jeweils die Geometrie des Hindernisses berücksichtigen und sich voneinander unterscheiden. Die Duplikate werden anschließend in einem Trainingsvorgang zumindest teilweise zum Trainieren einer künstlichen Intelligenz, insbesondere eines neuronalen Netzwerks, eingesetzt. Das heißt, dass die künstliche Intelligenz, insbesondere das neuronalen Netzwerk, mit zumindest einem Teil der Duplikate dahingehend trainiert wird, dass der Roboter das Hindernis vor einer Kollision mit dem Hindernis erkennt. Ein Ergebnis dieses Trainingsvorgangs, nachfolgend auch Trainingsergebnis genannt, wird dann zur Umgehung des Hindernisses durch den Roboter verwendet.

Das erfindungsgemäße Verfahren wird also durch die Kollision des Roboters mit einem Hindernis ausgelöst, wobei die Kollision zugleich als Identifikation des Hindernisses als unpassierbares Hindernis oder zumindest als Indikator hierfür dient.

Die Verwendung des Trainingsergebnisses zur Umgehung des Hindernisses erfolgt zweckmäßig durch die Berücksichtigung und/oder Integration des Trainingsergebnisses in der Bewegungsroutine.

Beim erfindungsgemäßen Verfahren handelt es sich insbesondere um ein computerimplementiertes Verfahren. Das Verfahren kann also insbesondere durch Mittel zur Datenverarbeitung ausgeführt werden.

Beim Roboter kann es sich prinzipiell um einen beliebigen Roboter handeln, der sich im Betrieb durch den Raum bewegt.

Beim Roboter handelt es sich insbesondere um einen Haushaltsroboter, der sich im Betrieb durch einen Haushalt bewegt. Der Roboter kann hierbei zu Reinigungszwecken eingesetzt werden. Beim Roboter kann es sich also beispielsweise um einen Reinigungsroboter, beispielsweise einen Saugroboter, handeln.

Erfindungsgemäß dient die Originalaufnahme auch der Erzeugung von Duplikaten, welche zum Eintrainieren eingesetzt werden. Das heißt, dass aus der Originalaufnahme eine Vielzahl von Duplikaten erzeugt wird, welche die Geometrie des Hindernisses berücksichtigen und sich jeweils voneinander unterscheiden, wobei diese Duplikate im Trainingsvorgang eingesetzt werden. Diese Duplikate werden nachfolgend auch als Trainings-Duplikate bezeichnet. Zudem werden aus der Originalaufnahme eine Vielzahl von Duplikaten erzeugt, welche die Geometrie des Hindernisses berücksichtigen und sich jeweils voneinander unterscheiden, wobei diese Duplikate zum Testen des Trainingsvorgangs eingesetzt werden. Diese Duplikate werden nachfolgend auch als Test-Duplikate bezeichnet. Die künstliche Intelligenz, insbesondere das neuronale Netzwerk, wird im Trainingsvorgang mit den Trainings-Duplikaten trainiert. Der Trainingsvorgang wird dabei in Intervallen unterbrochen und ein Zwischenergebnis des Trainingsvorgangs in einem Testvorgang mit zumindest einem Teil der Test-Duplikate getestet. In dem jeweiligen Testvorgang wird das Zwischenergebnis dahingehend getestet, mit welcher Wahrscheinlichkeit der Roboter das Hindernis vor einer Kollision erkennt. Wenn die Wahrscheinlichkeit oberhalb eines vorgegebenen Werts liegt, wird das Zwischenergebnis als Trainingsergebnis festgelegt und verwendet. Liegt die Wahrscheinlichkeit demgegenüber unterhalb des vorgegebenen Werts, wird der Trainingsvorgang fortgesetzt und anschließend wieder in Intervallen durch Testvorgänge getestet. Somit werden ausgehend von der Originalaufnahme des Hindernisses, insbesondere einer einzigen Originalaufnahme, sowohl das Trainieren der künstlichen Intelligenz als auch das Testen der künstlichen Intelligenz, insbesondere des Trainingsergebnisses, realisiert.

Bei der Erzeugung der künstlichen Duplikate wird jeweils die aus der Originalaufnahme stammende Geometrie des Hindernisses berücksichtigt. Das heißt insbesondere, dass die Geometrie des Hindernisses in zumindest einem Teil der Duplikate beibehalten wird.

Alternativ oder zusätzlich ist es möglich, die Geometrie des Hindernisses in zumindest einem Teil der Duplikate geringfügig zu ändern. Die geringfügige Änderung ist insbesondere dann möglich, wenn die künstliche Intelligenz das Hindernis einem bekannten Gegenstand zuordnen kann, wobei einzelne Merkmale des Gegenstands geändert werden können. Als Beispiel sei hier auf eine Tür als Hindernis verwiesen. Sofern das Hindernis als Tür identifiziert wird, ist es beispielsweise möglich, die Form und/oder Größe eines Griffs der Tür zu ändern, um unterschiedliche Duplikate zu erzeugen. Ebenso kann die relative Anordnung des Griffs geändert werden, um unterschiedliche Duplikate zu erzeugen.

Vorteilhaft werden zumindest ein Teil der Duplikate dadurch erzeugt, dass sich eine Umgebung, insbesondere ein Hintergrund, des Hindernisses in Duplikaten voneinander unterscheidet. Das heißt, dass in die Umgebung, insbesondere der Hintergrund, des Hindernisses künstlich variiert wird, um verschiedene Duplikate zu erzeugen.

Alternativ oder zusätzlich ist es vorstellbar, dass zumindest ein Teil der Duplikate derart erzeugt wird, dass sich eine Stellung des Hindernisses in den Duplikaten voneinander unterscheidet. Das heißt, dass eine Stellung des Hindernisses künstlich verändert wird, um verschiedene Duplikate zu erzeugen. Die unterschiedlichen Stellungen betreffen beispielsweise lineare Verschiebungen und/oder Drehungen des Hindernisses. Als Beispiel sei hier erneut auf eine Tür verwiesen, deren Schließstellung künstlich variiert wird, um unterschiedliche Duplikate zu erzeugen.

Vorstellbar ist es ebenso, alternativ oder zusätzlich die Farbe des Gegenstandes künstlich zu variieren, um unterschiedliche Duplikate zu erzeugen.

Bevorzugt ist es, wenn die Originalaufnahme mit einem Abstand zum Gegenstand gefertigt wird. Das heißt, dass die Originalaufnahme den Gegenstand nicht aus unmittelbarer Nähe zeigt. Dies ermöglicht eine verbesserte Erzeugung von Duplikaten und führt zu einer zuverlässigeren Umgehung des Hindernisses.

Es versteht sich, dass neben dem genannten Verfahren auch ein System, in welchem das Verfahren durchgeführt wird, zum Umfang dieser Erfindung gehört.

Das System umfasst den Roboter sowie eine IT-Infrastruktur.

Der Roboter weist vorteilhaft eine optische Aufnahmeeinrichtung zum Fertigen von optischen Aufnahmen sowie eine Bewegungseinrichtung zum automatischen Bewegen des Roboters auf. Die optische Aufnahmeeinrichtung kommt bevorzugt ferner zum Durchführen der Bewegungsroutine, das heißt insbesondere zum Navigieren des Roboters durch einen Raum zum Einsatz. Somit erfolgt das Fertigen der Originalaufnahme durch den Roboter, wobei bevorzugt die optische Aufnahmeeinrichtung zum Einsatz kommt, welche auch zum Durchführen der Bewegungsroutine eingesetzt wird. Dies führt zu einem vereinfachten Aufbau des Roboters und somit zu einer kostengünstigen Herstellung. Die künstliche Intelligenz ist in der IT-Infrastruktur realisiert. Die IT-Infrastruktur umfasst also die künstliche Intelligenz, insbesondere das neuronale Netzwerk. Das System ist dabei derart ausgestaltet, dass es das erfindungsgemäße Verfahren durchführt.

Insbesondere ist das System derart ausgestaltet, dass der Roboter mit der Aufnahmeeinrichtung die Originalaufnahme fertigt und an die IT-Infrastruktur übermittelt. Das System ist ferner derart ausgestaltet, dass die IT-Infrastruktur die Duplikate erzeugt und den Trainingsvorgang sowie gegebenenfalls den jeweiligen Testvorgang durchführt.

Die IT-Infrastruktur kann prinzipiell gänzlich vom Roboter separat sein.

Vorteilhaft sind Varianten, bei denen der Roboter eine Steuereinrichtung aufweist, der Bestandteil der IT-Infrastruktur ist. Vorteilhaft ist es hierbei, wenn die Steuereinrichtung insbesondere dem Durchführen der Bewegungsroutine dient. Zudem weist die IT-Infrastruktur eine vom Roboter separate Hauptstruktur auf, welche die künstliche Intelligenz, insbesondere das neuronale Netzwerk, umfasst. Somit werden die ressourcenintensiven Vorgänge der IT-Infrastruktur außerhalb des Roboters durchgeführt. Folglich kann der Roboter einfach und kostengünstig hergestellt werden. Zudem kann die Hauptstruktur für eine Vielzahl von Robotern eingesetzt werden, sodass das gesamte System einfacher und kostengünstiger ausgestaltet ist. Das System umfasst zweckmäßig eine Kommunikationseinrichtung, über welche der Roboter, insbesondere die Steuereinrichtung, und die Hauptstruktur miteinander kommunizieren. Die Kommunikationseinrichtung ist insbesondere zur drahtlosen Kommunikation zwischen dem Roboter und der Hauptstruktur ausgestaltet.

Hierbei fertigt der Roboter, insbesondere mit der Aufnahmeeinrichtung und der Steuereinrichtung, die Originalaufnahme. Dabei kann der Roboter zum Fertigen der Originalaufnahme nach der Kollision mit dem Hindernis vom Hindernis wegbewegt werden, um die Originalaufnahme mit Abstand zum Hindernis zu fertigen. Die Originalaufnahme wird über die Kommunikationseinrichtung an die Hauptstruktur übertragen. Beim Vorliegen eines Trainingsergebnisses wird dieses bevorzugt über die Kommunikationseinrichtung dem Roboter übermittelt, der dieses Trainingsergebnis berücksichtigt, um das Hindernis künftig zu umgehen.

Die Hauptstruktur kann prinzipiell lokal einem Nutzer zugeordnet sein. Die Hauptstruktur kann also insbesondere ein lokaler Server, insbesondere ein Heimserver, sein.

Bevorzugt ist die Hauptstruktur als Cloud-Dienst realisiert. Dies ermöglicht eine vielfältig einsetzbare und insgesamt kostengünstige Realisierung des Systems.

Die Bewegungseinrichtung dient dem automatischen Bewegen des Roboters durch einen Raum. Die Bewegungseinrichtung weist zu diesem Zweck beispielsweise einen Elektromotor und dergleichen auf.

Der Roboter weist vorteilhaft eine Einrichtung zum Detektieren von Kollisionen des Roboters mit Hindernissen auf, welche nachfolgend auch als Detektionseinrichtung bezeichnet wird. Die Erkennung der Kollision erfolgt also innerhalb des Roboters, sodass eine ständige Verwendung der künstlichen Intelligenz auf die erfindungsgemäß beschriebene Art, das heißt zur Erzeugung der Duplikate und zum Trainieren, nicht notwendig ist. Zudem wird auf diese Weise das erfindungsgemäße Verfahren durch den Roboter ausgelöst.

Die Detektionseinrichtung kann prinzipiell beliebig ausgestaltet sein, sofern sie die Erkennung einer Kollision des Roboters mit einem Hindernis ermöglicht.

Die Direktionseinrichtung kann beispielsweise zumindest einen taktilen Sensor aufweisen, der eine Kollision mit einem Hindernis durch einen taktilen Kontakt mit dem Hindernis erkennt. Alternativ oder zusätzlich kann die Detektionseinrichtung eine Leistungsaufnahme der Bewegungseinrichtung, beispielsweise des Elektromotors, überwachen, um auf Basis der Leistungsaufnahme eine Kollision zu erkennen. Insbesondere wird hierbei ein plötzlicher und starker Anstieg der Leistungsaufnahme als ein Indikator für eine Kollision verwendet. Vorstellbar ist es, alternativ oder zusätzlich die Kollision mit einem Hindernis durch den Kombinierten Einsatz mehrerer Sensoren zu erkennen. Es können insbesondere Informationen der Detektionseinrichtung zur Leistungsaufnahme beispielsweise und vorteilhaft mit Daten einer Intertialsensorik, welche vorteilhaft einen Gyroskop und/oder einen Beschleunigungssensoren aufweist, kombiniert werden, um Kollisionen mit verbesserter Zuverlässigkeit von anderen Zustände höherer Leistungsaufnahme, wie Fahrten über Teppiche und andere weiche Untergründe, zu unterscheiden

Der Roboter kann selbstverständlich je nach vorgesehenem Einsatz auch weitere Bestandteile aufweisen. Beispielsweise kann ein Reinigungsroboter eine Reinigungseinrichtung, etwa eine Saugeinrichtung zum Saugen eines Untergrunds, aufweisen.

Es versteht sich, dass neben dem Verfahren und dem System auch ein Computerprogramm, das Befehle umfasst, welche bewirken, dass das erfindungsgemäße Verfahren ausgeführt wird, insbesondere, dass das System das erfindungsgemäße Verfahren ausführt, zum Umfang dieser Erfindung gehört. Ebenso gehört ein computerlesbares Medium, auf dem ein solches Computerprogramm gespeichert ist, zum Umfang dieser Erfindung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

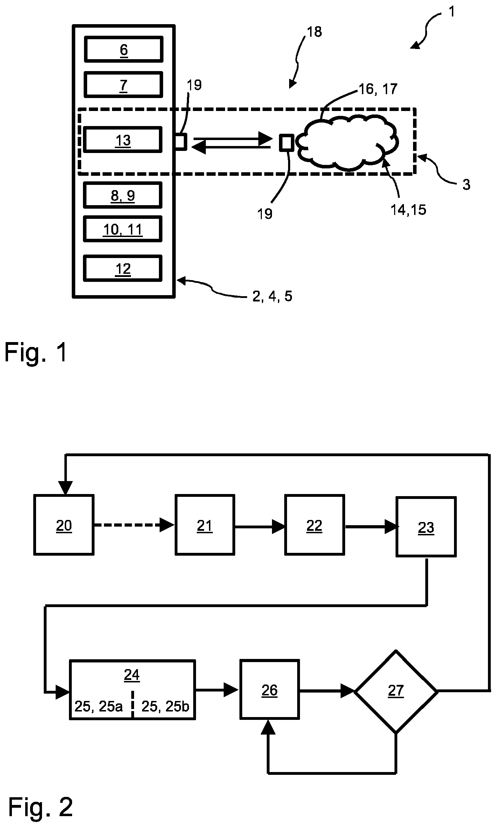

Es zeigen, jeweils schematisch
- Figur 1: eine stark vereinfachte symbolartige Darstellung eines Systems mit einem Roboter und einer IT-Infrastruktur,
- Figur 1: ein Flussdiagramm zu einem Verfahren zum Betreiben des Systems.

Ein System 1, wie es beispielhaft in Figur 1 stark vereinfacht dargestellt ist, wird gemäß einem Verfahren, das in Figur 2 beispielhaft anhand eines Flussdiagramms gezeigt ist, betrieben.

Das System 1 umfasst einen Roboter 2 sowie eine IT-Infrastruktur 3. Der Roboter 2 ist im gezeigten Ausführungsbeispiel ein Haushaltsroboter 4, beispielsweise ein Reinigungsroboter 5 zum Reinigen eines nicht gezeigten Haushalts. Der Roboter 2 weist eine optische Aufnahmeeinrichtung 6 auf, die bevorzugt zum Bewegen und Navigieren des Roboters 2 zum Einsatz kommt. Mit der optischen Aufnahmeeinrichtung 6 ist es insbesondere möglich, optische Aufnahmen von der Umgebung des Roboters 2 zu fertigen. Der Roboter 2 weist ferner eine Bewegungseinrichtung 7 zum automatischen Bewegen des Roboters 2 auf. Die Bewegungseinrichtung 7 kein beispielsweise einen nicht gezeigten Elektromotor aufweisen, der zumindest ein nicht gezeigtes Rad des Roboters 2 antreibt. Zur energetischen Versorgung des Roboters 2 weist der Roboter ferner einen Energiespeicher 8, insbesondere einen wiederaufladbaren Akkumulator 9, auf. Der als Reinigungsroboter 5 ausgebildete Roboter 2 weist ferner eine Reinigungseinrichtung 10, beispielsweise eine Saugeinrichtung 11, auf, mit welcher der Roboter 2 einen nicht gezeigten Raum, insbesondere den Haushalt, reinigt. Der Roboter 2 weist ferner eine Detektionseinrichtung 12 auf, die derart ausgestaltet ist, dass sie eine Kollision des Roboters 2 mit einem nicht gezeigten Hindernis erkennt.

Die IT-Infrastruktur 3 umfasst im Roboter 2 angeordnete Bestandteile sowie vom Roboter 2 separate Bestandteile und ist in Figur 1 durch einen gestrichelten Kasten angedeutet. Bestandteil der IT-Infrastruktur 3 ist eine Steuereinrichtung 13 des Roboters 2. Die Steuereinrichtung 13 ist kommunizierend mit der Aufnahmeeinrichtung 6 und der Bewegungseinrichtung 7 verbunden. Bevorzugt ist die Steuereinrichtung ferner der Detektionseinrichtung 12 kommunizierend verbunden. In der Steuereinrichtung 13 ist eine Routine 20 (siehe Figur 2) zum Bewegen des Roboters 2 hinterlegt, welche nachfolgend auch als Bewegungsroutine 20 bezeichnet wird. In der Bewegungsroutine 20 ist beispielsweise ein Raum abgebildet, durch den sich der Roboter 2 bewegen soll bzw. darf. Die Bewegungsroutine 20 kann ferner Hindernisse, die vom Roboter 2 zu umgehen sind, beinhalten, wobei diese Hindernisse nachfolgend auch als bekannte Hindernisse bezeichnet werden.

Die IT-Infrastruktur 3 umfasst ferner eine Hauptstruktur 14, die im gezeigten Beispiel und bevorzugt ein Cloud-Dienst 15 ist. Die Hauptstruktur 14 umfasst eine künstliche Intelligenz 16, insbesondere ein neuronales Netzwerk 17. Der Roboter 2, insbesondere die Steuereinrichtung 13, und die Hauptstruktur 14 kommunizieren über eine Kommunikationseinrichtung 18, bevorzugt drahtlos, miteinander, wobei die Kommunikationseinrichtung 18 am Roboter 2 sowie an der Hauptstruktur 14 jeweils eine Kommunikationseinheit 19 aufweist.

Entsprechend des in Figur 2 beispielhaft gezeigten Flussdiagramms wird der Roboter 2 unter Verwendung der Bewegungsroutine 20 durch den Raum bewegt. Hierbei werden die Umgebung mit der Aufnahmeeinrichtung 6 überwacht. Beim Erkennen bekannter Hindernisse werden diese umgangen, also eine Kollision des Roboters 2 mit dem bekannten Hindernis verhindert. Die Aufnahmeeinrichtung 6 wird somit zum Navigieren des Roboters 2 eingesetzt. Im Betrieb erfolgt durch den als Reinigungsroboter 5 ausgestalteten Roboter 2 mithilfe der Reinigungseinrichtung 10 eine Reinigung des Raums, insbesondere eines nicht gezeigten Untergrunds.

Ein Verfahren zur Umgehung von Hindernissen, welche in der Bewegungsroutine 20 nicht berücksichtigt sind, nachfolgend auch unbekannte Hindernisse genannt, wird ausgelöst, wenn der Roboter 2 mit solch einem Hindernis kollidiert. Aus diesem Grund ist der Übergang in eine anschließende Maßnahme 21 in Figur 2 gestrichelt dargestellt. Dabei wird bei dieser das Verfahren auslösenden Maßnahme 21, nachfolgend auch Erkennungsmaßnahme 21 genannt, eine Kollision des Roboters 2 mit dem Hindernis erkannt. Zu diesem Zweck kommt die Detektionseinrichtung 12 des Roboters 2 zum Einsatz. Die erfolgte Kollision mit dem Hindernis dient als Anlass zur Annahme, dass es sich um ein unbekanntes Hindernis handelt. Bei einer nachfolgenden Maßnahme 22 wird der Roboter 2 vom Hindernis wegbewegt, sodass der Roboter 2 mit einem Abstand zum Hindernis angeordnet ist. Diese Maßnahme 22 wird nachfolgend daher auch als Abstandmaßnahme 22 bezeichnet. Befindet sich der Roboter 2 mit dem Abstand zum Hindernis, wird bei einer Maßnahme 23, die nachfolgend auch als Aufnahmemaßnahme 23 bezeichnet wird, mithilfe der Aufnahmeeinrichtung 6 eine optische Aufnahme des Hindernisses gefertigt, wobei diese Aufnahme nachfolgend auch als Originalaufnahme bezeichnet wird. Die Originalaufnahme wird dann mithilfe der Kommunikationseinrichtung 18 an die Hauptstruktur 14 übertragen.

Das Verfahren wird in der Hauptstruktur 14 fortgesetzt. In der Hauptstruktur 14 wird bei einer Duplikationsmaßnahme 24 eine Vielzahl von Duplikaten 25 der Originalaufnahme künstlich erzeugt. Die Duplikate 25 berücksichtigen jeweils die Geometrie des Hindernisses und unterscheiden sich voneinander. Die Unterschiede der Duplikate 25 können durch künstlich erzeugte unterschiedliche Stellungen des Hindernisses und/oder künstlich erzeugte unterschiedliche Farben des Hindernisses und/oder künstlich erzeugte unterschiedliche Hintergründe des Hindernisses realisiert sein. Die Duplikate 25 werden in zwei Gruppen geteilt, nämlich in Trainings-Duplikate 25a und Tests-Duplikate 25b.

Anschließend wird in einem Trainingsvorgang 26 die künstliche Intelligenz 16 mit den Trainings-Duplikaten 25a trainiert. Im Trainingsvorgang 26 wird die künstliche Intelligenz 16, insbesondere das neuronale Netzwerk 17, dahingehend trainiert, dass der Roboter 2 in der Bewegungsroutine 20 das Hindernis vor einer Kollision erkennt und dieses umgeht. Der Trainingsvorgang 26 wird in einem Testvorgang 27 in Intervallen unterbrochen und somit pausiert. Beim Testvorgang 27 wird ein bis dato gezieltes Ergebnis des Trainingsvorgangs 26, nachfolgend auch Zwischenergebnis genannt, getestet. Beim Testvorgang 27 werden hierbei die Test-Duplikate 25b verwendet. Im Testvorgang 26 wird mit zumindest einem Teil der Test-Duplikaten 25b getestet, mit welcher Wahrscheinlichkeit der Roboter 2, insbesondere die Bewegungsroutine 20 unter Verwendung des Zwischenergebnisses, das Hindernis vor einer Kollision erkennt. Liegt die Wahrscheinlichkeit unterhalb eines vorgegebenen Wertes, kehrt das Verfahren zum Trainingsvorgang 26 zurück und der Trainingsvorgang 26 wird fortgesetzt. Liegt die Wahrscheinlichkeit oberhalb des vorgegebenen Werts, wird das Zwischenergebnis als Trainingsergebnis festgehalten und bei der Bewegungsroutine 20 des Roboters 2 verwendet. Zu diesem Zweck überträgt die Hauptstruktur 14 mithilfe der Kommunikationseinrichtung 18 das Trainingsergebnis an die Steuereinrichtung 13, um das Trainingsergebnis in die Bewegungsroutine 20 zu integrieren. Die Integration des Trainingsergebnisses in die Bewegungsroutine 20 kann innerhalb des Roboters 2, insbesondere durch die Steuereinrichtung 13, erfolgen. Alternativ kann die Hauptstruktur 14 das Trainingsergebnis in die Bewegungsroutine 20 integrieren und die das Trainingsergebnis berücksichtigende Bewegungsroutine 20 an den Roboter 2, insbesondere an die Steuereinrichtung 13 übermitteln, die dann die das Trainingsergebnis berücksichtigende Bewegungsroutine 20 verwendet.

Während des Trainingsvorgangs 26 und des Testvorgangs 27 kann der Roboter 2 normal betrieben werden. Das heißt insbesondere, dass der Roboter 2 während des Trainingsvorgangs 26 und des Testvorgangs 27 die vorhandene Bewegungsroutine 20 verwenden kann.

### Bezugszeichenliste

- 1: System
- 2: Roboter
- 3: IT-Infrastruktur
- 4: Haushaltsroboter
- 5: Reinigungsroboter
- 6: Aufnahmeeinrichtung
- 7: Bewegungseinrichtung
- 8: Energiespeicher
- 9: Akkumulator
- 10: Reinigungseinrichtung
- 11: Saugeinrichtung
- 12: Detektionseinrichtung
- 13: Steuereinrichtung
- 14: Hauptstruktur
- 15: Could-Dienst
- 16: Künstliche Intelligenz
- 17: Neuronales Netzwerk
- 18: Kommunikationseinrichtung
- 19: Kommunikationseinheit
- 20: Bewegungsroutine
- 21: Erkennungsmaßnahme
- 22: Abstandsmaßnahme
- 23: Abstandmaßnahme
- 24: Duplikationsmaßnahme
- 25: Duplikat
- 26: Trainingsvorgang
- 27: Testvorgang

## Patentansprüche

1. Verfahren, insbesondere computerimplementiertes Verfahren, zur Umgehung von unpassierbaren Hindernissen durch einen Roboter (2), insbesondere einen Haushaltsroboter (4); wobei beim Bewegen des Roboters durch einen Raum eine Kollision des Roboters (2) mit einem Hindernis erkannt wird; wobei eine optische Originalaufnahme des Hindernisses gefertigt wird; wobei aus der Originalaufnahme eine Vielzahl von künstlichen Duplikaten (25) erzeugt wird, welche jeweils die Geometrie des Hindernisses berücksichtigen und sich voneinander unterscheiden; wobei eine künstliche Intelligenz (16), insbesondere ein neuronales Netzwerk (17), in einem Trainingsvorgang (26) mit zumindest einem Teil der Duplikate (25) dahingehend trainiert wird, dass der Roboter (2) künftig das Hindernis vor einer Kollision mit dem Hindernis erkennt; wobei ein Trainingsergebnis des Trainingsvorgangs (26) zur Umgehung des Hindernisses durch den Roboter (2) in einer Bewegungsroutine des Roboters (2) verwendet wird, **dadurch gekennzeichnet, dass** aus der Originalaufnahme Trainings-Duplikate (25a) und Test-Duplikate (25b) erzeugt werden; dass die künstliche Intelligenz (16) im Trainingsvorgang (16) mit den Trainings-Duplikaten (25a) trainiert wird; dass der Trainingsvorgang (26) in Intervallen unterbrochen und ein Zwischenergebnis des Trainingsvorgangs (26) in einem Testvorgang (27) mit zumindest einem Teil der Test-Duplikaten (25b) getestet wird, dahingehend, mit welcher Wahrscheinlichkeit der Roboter (26) das Hindernis vor einer Kollision erkennt; dass das Zwischenergebnis als Trainingsergebnis verwendet wird, wenn die Wahrscheinlichkeit oberhalb eines vorgegebenen Werts liegt; und dass, wenn die Wahrscheinlichkeit unterhalb des vorgegebenen Werts liegt, der Trainingsvorgang fortgesetzt und anschließend wieder in Intervallen durch Testvorgänge getestet wird.

2. Verfahren nach Anspruch 1, **dadurch gekennzeichnet, dass** zumindest ein Teil der Duplikate (25) derart erzeugt wird, dass sich eine Umgebung des Hindernisses in den Duplikaten (25) voneinander unterscheidet.

3. Verfahren nach einem der Ansprüche 1 oder 2, **dadurch gekennzeichnet, dass** zumindest ein Teil der Duplikate (25) derart erzeugt wird, dass sich eine Stellung des Hindernisses in den Duplikaten (25) voneinander unterscheidet.

4. Verfahren nach einem der Ansprüche 1 bis 3, **dadurch gekennzeichnet, dass** die Originalaufnahme mit einem Abstand zum Hindernis gefertigt wird.

5. System (1) mit einem Roboter (2), insbesondere einem Haushaltsroboter (4), und einer IT-Infrastruktur (3); wobei der Roboter (2) eine optische Aufnahmeeinrichtung (6) zum Fertigen von optischen Aufnahmen und eine Bewegungseinrichtung (7) zum Bewegen des Roboters (2) aufweist; wobei die IT-Infrastruktur (3) eine künstliche Intelligenz (16), insbesondere ein neuronales Netzwerk (17), umfasst; wobei das System (1) derart ausgestaltet ist, dass es das Verfahren nach einem der Ansprüche 1 bis 4 durchführt.

6. System nach Anspruch 5, **dadurch gekennzeichnet, dass** der Roboter (2) eine Steuereinrichtung (13) aufweist, der Bestandteil der IT-Infrastruktur (3) ist; dass die IT-Infrastruktur (3) eine vom Roboter (2) separate Hauptstruktur (14) aufweist, welche die künstliche Intelligenz (16) umfasst; dass das System (1) eine Kommunikationseinrichtung (19) zur Kommunikation zwischen der Steuereinrichtung (13) und der Hauptstruktur (14) aufweist.

7. System nach Anspruch 5 oder 6, **dadurch gekennzeichnet, dass** der Roboter (2) eine Detektionseinrichtung (12) zur Detektion von Kollisionen des Roboters (2) mit Hindernissen aufweist.

8. Computerprogramm, das Befehle umfasst, welche bewirken, dass das System (1) nach einem der Ansprüche 5 bis 7 das Verfahren gemäß einem der Ansprüche 1 bis 4 ausführt.

9. Computerlesbares Medium, auf dem das Computerprogramm nach Anspruch 8 gespeichert ist.

## Claims

1. Method, in particular computer-implemented method, for the bypassing of impassable obstacles by a robot (2), in particular a household robot (4); wherein a collision of the robot (2) with an obstacle is detected as the robot moves through a room; wherein an optical original recording of the obstacle is produced; wherein a multiplicity of artificial duplicates (25) is generated from the original recording, which duplicates in each case take account of the geometry of the obstacle and differ from one another; wherein an artificial intelligence (16), in particular a neural network (17), is trained with at least some of the duplicates (25) in a training process (26) such that the robot (2) detects the obstacle prior to a collision with the obstacle in future; wherein a training result of the training process (26) is used for the bypassing of the obstacle by the robot (2) in a movement routine of the robot (2), **characterised in that** training duplicates (25a) and test duplicates (25b) are generated from the original recording; that the artificial intelligence (16) is trained in the training process (16) with the training duplicates (25a); that the training process (26) is broken down into intervals and an intermediate result of the training process (26) is tested in a test process (27) with at least some of the test duplicates (25b) in order to determine how likely the robot (26) is to detect the obstacle prior to a collision; that the intermediate result is used as the training result if the likelihood lies above a predetermined value; and if the likelihood lies below the predetermined value, the training process is continued and testing is subsequently performed at intervals by means of test processes.

2. Method according to claim 1, **characterised in that** at least some of the duplicates (25) are generated such that the surroundings of the obstacle differ from one duplicate (25) to another.

3. Method according to one of claims 1 or 2, **characterised in that** at least some of the duplicates (25) are generated such that a position of the obstacle differs from one duplicate (25) to another.

4. Method according to one of claims 1 to 3, **characterised in that** the original recording is produced at a distance from the obstacle.

5. System (1) with a robot (2), in particular a household robot (4), and an IT infrastructure (3); wherein the robot (2) has an optical recording facility (6) for producing optical recordings and a movement facility (7) for moving the robot (2); wherein the IT infrastructure (3) comprises an artificial intelligence (16), in particular a neural network (17); wherein the system (1) is embodied such that it carries out the method according to one of claims 1 to 4.

6. System according to claim 5, **characterised in that** the robot (2) has a control facility (13), which is a component of the IT infrastructure (3); that the IT infrastructure (3) has a main structure (14), separate from the robot (2), which comprises the artificial intelligence (16); that the system (1) has a communication facility (19) for communication between the control facility (13) and the main structure (14).

7. System according to claim 5 or 6, **characterised in that** the robot (2) has a detection facility (12) for detecting collisions of the robot (2) with obstacles.

8. Computer program comprising commands which cause the system (1) according to one of claims 5 to 7 to carry out the method according to one of claims 1 to 4.

9. Computer-readable medium on which the computer program according to claim 8 is stored.

## Revendications

1. Procédé, en particulier procédé mis en oeuvre par ordinateur, pour contourner des obstacles infranchissables par un robot (2), en particulier un robot domestique (4), dans lequel, lors du déplacement du robot (2) à travers une pièce, une collision du robot (2) avec un obstacle est détectée, dans lequel une prise de vue originale optique de l'obstacle est réalisée,
dans lequel, à partir de la prise de vue originale, une pluralité de duplications artificielles (25) sont générées, qui prennent en compte respectivement la géométrie de l'obstacle et se différencient l'une de l'autre,
dans lequel une intelligence artificielle (16), en particulier un réseau neuronal (17), est entraîné dans un processus d'apprentissage (26) avec au moins une partie des duplications (25), afin que le robot (2) identifie ultérieurement l'obstacle avant une collision avec l'obstacle,
dans lequel un résultat d'apprentissage du processus d'apprentissage (26) est utilisé pour contourner l'obstacle par le robot (2) dans une routine de déplacement du robot (2),
**caractérisé en ce que** des duplications d'apprentissage (25a) et des duplications de test (25b) sont générées à partir de la prise de vue originale,
**en ce que** l'intelligence artificielle (16) est entraînée dans un processus d'apprentissage (16) avec les duplications d'apprentissage (25a),
**en ce que** le processus d'apprentissage (26) est interrompu pendant des intervalles et un résultat intermédiaire du processus d'apprentissage (26) est testé dans un processus de test (27) avec au moins une partie des duplications de test (25b), en vue de préciser avec quelle probabilité le robot (26) détecte l'obstacle avant une collision,
**en ce que** le résultat intermédiaire est utilisé à titre de résultat d'apprentissage lorsque la probabilité est supérieure à une valeur prédéfinie, et
**en ce que**, lorsque la probabilité est inférieure à la valeur prédéfinie, le processus d'apprentissage est poursuivi et est testé ensuite à nouveau par intervalles par des processus de test.

2. Procédé selon la revendication 1, **caractérisé en ce qu'**au moins une partie des duplications (25) est générée de sorte qu'un environnement de l'obstacle se différencie l'un de l'autre dans les duplications (25).

3. Procédé selon l'une des revendications 1 ou 2, **caractérisé en ce qu'**au moins une partie des duplications (25) est générée de sorte qu'une position de l'obstacle se différencie l'une de l'autre dans les duplications (25).

4. Procédé selon l'une des revendications 1 à 3, **caractérisé en ce que** la prise de vue originale est réalisée à une distance de l'obstacle.

5. Système (1) comprenant un robot (2), en particulier un robot domestique (4) et une infrastructure informatique (3), dans lequel le robot (2) présente un dispositif de prise de vue optique (6) pour réaliser des prises de vue optiques et un dispositif de déplacement (7) pour déplacer le robot (2), dans lequel l'infrastructure informatique (3) comprend une intelligence artificielle (16), en particulier un réseau neuronal (17), dans lequel le système (1) est configuré de sorte à exécuter le procédé selon l'une des revendications 1 à 4.

6. Système selon la revendication 5, **caractérisé en ce que** le robot (2) présente un dispositif de commande (13), qui fait partie intégrante de l'infrastructure informatique (3), **en ce que** l'infrastructure informatique (3) présente une structure principale (14) séparée du robot (2), laquelle comprend l'intelligence artificielle (16), et
**en ce que** le système (1) présent un dispositif de communication (19) pour une communication entre le dispositif de commande (13) et la structure principale (14).

7. Système selon la revendication 5 ou 6, **caractérisé en ce que** le robot (2) présente un dispositif de détection (12) pour détecter des collisions du robot (2) avec des obstacles.

8. Programme informatique, qui comprend des instructions qui amènent le système (1) selon l'une des revendications 5 à 7 à exécuter le procédé selon l'une des revendications 1 à 4.

9. Support lisible par un ordinateur, sur lequel le programme informatique selon la revendication 8 est stocké.
